# EUROPEAN PATENT APPLICATION

(11) **EP 1 414 167 A2**
(43) Date of publication of application: **28.04.2004**
(21) Application number: 03023606.1
(22) Date of filing: 16.10.2003
(51) Int. Cl.: H04B 7/185

(54) **Method for receiving signals through satellites**

(30) Priority: 21.10.2002 JP 2002305340
(71) Applicant: Hitachi, Ltd., Chiyoda-ku, Tokyo 101-8010 (JP)
(72) Inventor: Iwata, Tadayoshi, Hitachi Ltd., Intel. Prop. Group, Chiyoda-ku, Tokyo 100-8220 (JP); Maeda, Toshihide, Hitachi Ltd., Intel. Prop. Group, Chiyoda-ku, Tokyo 100-8220 (JP); Ishida, Takaharu, Hitachi Ltd., Intel. Prop. Group, Chiyoda-ku, Tokyo 100-8220 (JP); Inoue, Hideki, Hitachi Ltd., Intel. Prop. Group, Chiyoda-ku, Tokyo 100-8220 (JP)
(74) Representative: Strehl Schübel-Hopf & Partner

(57) **Abstract**

A communication/broadcasting system (1) provides a communication service and/or a broadcasting service between a communication/broadcasting center station (4) and a mobile station (6) and a fixed station (7) present in a beam spot (5) through orbiting satellites (3) controlled by a satellite control station (2) in order to prevent a degraded quality and permit users to receive the provision of the services at any location in a service area through the satellite (3) positioned at an elevation angle suitable for communications/broadcasting. The orbiting satellite (3) is switched to another at a timing at which the elevation angle can be kept high, thereby preventing a degraded quality of communications/broadcasting.

## Description

### BACKGROUND OF THE INVENTION

The present invention relates to a method of receiving signals through satellites, a service providing method and a satellite control method, a receiver terminal, and a satellite control apparatus.

In recent years, systems for communicating or broadcasting to mobile stations and the like through satellites have been under development. Satellites available for such communications are classified into a geosynchronous orbit satellite which orbits the earth over the equator plane at the same period as the period of rotation of the earth, i.e., a geostationary orbit satellite which appears to be stationary, when viewed from the earth, and an orbiting satellite which is a non-geostationary orbit satellite which orbits the earth at an altitude lower than the geostationary orbit satellite at a speed relative to the period of rotation of the earth.

In middle and high latitude regions such as Japan, since the geostationary orbit satellites are positioned at low elevation angles, radiowaves are often blocked in urban districts where many high buildings are found, making it difficult to provide high quality communication and broadcasting services for mobile stations.

On the other hand, a plurality of orbiting satellites may be utilized to prevent radiowaves from being blocked by switching a satellite for use in communications and broadcasting to a satellite which is positioned at the zenith, because the satellites can be controlled such that at least one is positioned at all times near the zenith. Thus, communications and broadcasting of higher quality can be provided in this strategy, as compared with services provided using geostationary orbit satellites. It should be noted that the orbiting satellite may be sometimes referred to as a quasi-zenith orbit satellite from the fact that at least one satellite is positioned near the zenith.

JP-A-2000-332670 (see pages 9, 15-16, 19-21), for example, describes a conventional communication system based on the orbiting satellites, which is expected to provide communication and broadcasting services of high quality as mentioned above.

Specifically, this communication system comprises satellites; uplink stations for transmitting satellite broadcasting through the satellites; and satellite broadcasting receivers for receiving the satellite broadcasting. Contents suitable for broadcasting may be, for example, meteorologic information and traffic information, voice/data, entertainment information, and the like. The satellites used in the system typically stay in orbit at an orbital inclination angle in a range of 37 degrees or more to 44 degrees or less with an eccentricity less than 0.24, or at an orbital inclination angle in a range of larger than 40 degrees to 44 degrees or less with an eccentricity in a range of 0.24 or more to 0.35 or less. Such satellites are controlled on the basis of six orbit elements which consist of semimajor axis, argument of perigee, orbital inclination angle, eccentricity, right ascension of ascending node, and true anomaly.

However, since the orbiting satellites rely on handover among the orbiting satellites to continue communications/ broadcasting because the satellites must be switched from one to another for use in the communications/broadcasting, as previously mentioned. Therefore, when a terminal such as a mobile station employs a highly directive satellite tracking antenna, the terminal requires a certain time for changing the orientation of the satellite tracking antenna in order to track an orbiting satellite which can overtake the communications/broadcasting, wherein the communications/broadcasting will be interrupted during that time. When viewed from the user's perception, a communication or broadcasting is interrupted irrespective of the user's will while the user is just receiving the provision of the communication or broadcasting. Such an interrupt is unacceptable when an important communication or the like is being made. In addition, when an inter-satellite handover is collectively performed over a certain service area at a satellite switching timing which is determined on the basis of the elevation angles of the satellites in the area, the switching can be made to an orbiting satellite that is positioned at an elevation angle at which information cannot be transmitted to that location with a sufficiently high quality, depending on a particular location, even though there is an orbiting satellite that is positioned at a high elevation angle. Such a case should be eliminated because the system fails to make good use of better characteristics of the orbiting satellites at high elevation angles.

### SUMMARY OF THE INVENTION

It is therefore an object of the present invention to prevent a degraded quality of communication/broadcasting services provided to the user in the event of a handover from one orbiting satellite to another, so that any user can be provided with the services through the orbiting satellites at elevation angles suitable for providing communications/broadcasting at any location in a service area.

To achieve the above object, the present invention avoids a simultaneous inter-satellite handover. For a communication/broadcasting system which irradiates a plurality of beams from orbiting satellites to cover an overall service area, one orbiting satellite is switched to another at a time suitable for each beam from the orbiting satellite. At each location, the communication/broadcasting service is provided through an orbiting satellite at a sufficiently high elevation angle. For a communication/broadcasting system which irradiates a single or a plurality of beams to cover a service area, the beams are irradiated simultaneously from a pre-switching orbiting satellite and a post-switching orbiting satellite in a time zone suitable for each beam in the event of the inter-satellite handover, thereby sufficiently reducing the influence of the inter-satellite handover. Details on these features will be discussed in the following description of embodiments.

Other objects, features and advantages of the invention will become apparent from the following description of the embodiments of the invention taken in conjunction with the accompanying drawings.

### BRIEF DESCRIPTION OF THE DRAWINGS

Fig. 1 is a schematic diagram generally illustrating the configuration of a communication/broadcasting system according to one embodiment of the present invention;
Fig. 2 is a table showing exemplary orbit elements and orbital constellation for orbiting satellites;
Fig. 3 is a table showing other exemplary orbit elements and orbital constellation for orbiting satellites;
Fig. 4 is an explanatory diagram in which an orbit about the earth is overlooked with respect to an exemplary orbital constellation using three orbiting satellites;
Fig. 5 is a sky diagram showing a direction in which an orbiting satellite is visible from Naha;
Fig. 6 is a diagram showing an exemplary layout for a plurality of beam spots;
Fig. 7 is a diagram illustrating beam spots when one satellite is switched to another in time division;
Fig. 8 is a table showing an exemplary format for data which provide beam spots;
Fig. 9 is a timing chart for data transmission and reception in the event of switching from one satellite to another;
Fig. 10 is a block diagram illustrating the configuration of a terminal device;
Fig. 11 is a block diagram illustrating the configuration of a transmitter in a tracking, telemetry, and command (TTAC) station;
Fig. 12 is a graph for explaining the optimization for a satellite switching time in each area;
Fig. 13 is a diagram for explaining satellite switching time zones;
Fig. 14 is a graph for explaining satellite switching time zones;
Fig. 15 is a flow chart illustrating a procedure executed by the TTAC station for switching one satellite to another; and
Fig. 16 is a flow chart for explaining a procedure executed by the terminal device when one satellite is switched to another.

### DETAILED DESCRIPTION OF THE EMBODIMENTS

One embodiment of the present invention will be described below in detail with reference to the accompanying drawings.

### 1. Communication/Broadcasting System:

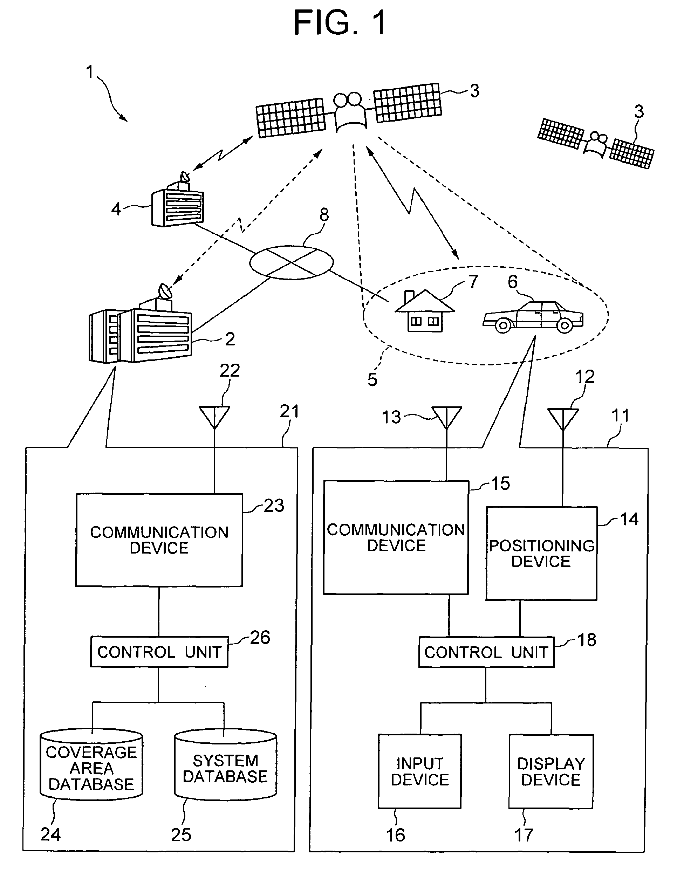

A communication/broadcasting system in this embodiment will be generally described with reference to Fig. 1.

The communication/broadcasting system 1 provides at least one of a communication service and a broadcasting service (hereinafter collectively called the communication/broadcasting service) between a communication/broadcasting center station 4 and a mobile station 6 and a fixed station 7, which are earth stations present within a spot of beam (beam spot 5) irradiated from one of orbiting satellites 3 controlled by a tracking, telemetry, and command (TTAC) station 2, through the orbiting satellite 3. The orbiting satellite 3 selected from among a plurality of candidates for the provision of the service is positioned near the zenith in a particular time zone. A so-called uplink line, for use in sending information from the mobile station 6 and fixed station 7 to the TTAC station 2, communication/broadcasting center station 4 and the like, may be implemented by an earth network 8 such as a known portable telephone system, the Internet or the like.

The mobile station 6 shown in Fig. 1 may be a car or a portable terminal, while the fixed station 7 may be a set-top box type terminal installed at the premises. Now, the terminal device 11 of the mobile station 6 will be taken as an example in the following description on the general configuration thereof for receiving the communication/broadcasting service through transmission/reception of signals from/to the mobile station 6 or fixed station 7.

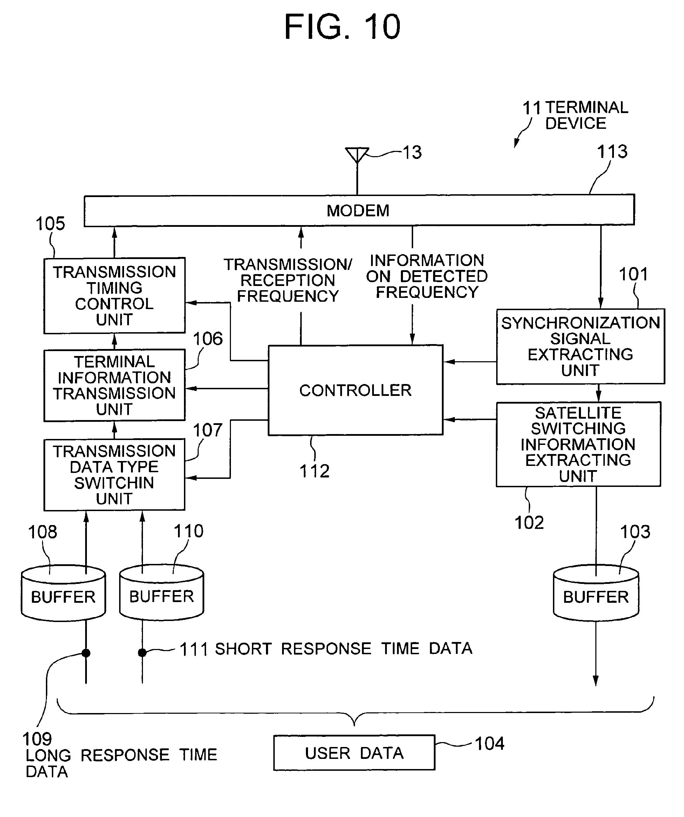

The terminal device 11 comprises a positioning antenna 12 for positioning a mobile body; a communication antenna 13 for making communications with the orbiting satellites 3; a positioning device 14 for locating a current position, calculating a moving speed and calculating a moving direction based on data received by the positioning antenna 12; a communication device 15 for transmitting and receiving data to and from the orbiting satellites 3; an input device 16 and a display device 17 which function as a user interface; a buffer, not shown in Fig. 1, which serves as a storage device; and a control unit 18. The control unit 18, which totally controls the terminal device 11, has among others a function of selecting necessary data from data received by the communication antenna 13 and data received by the positioning antenna 12 for displaying the selected data on the display device 17; a function of transmitting positioning information on the mobile station 6 to the TTAC station 2 if necessary; and a function of transmitting data entered by the user, who utilizes the receiver terminal 11, from the input device 16 to the communication/broadcasting center station 4 if the data should be communicated. Details on these functions will be described later with reference to Fig. 10. The antennas 12, 13 may be replaced with a single integrated antenna. The positioning device 14 used herein may be any of a positioning device using positioning satellites, referred to as the GPS (Global Positioning System), a positioning device using other positioning satellites, and a positioning device based on a portable telephone. The positioning antenna 12 may not be necessarily provided for the fixed station 7.

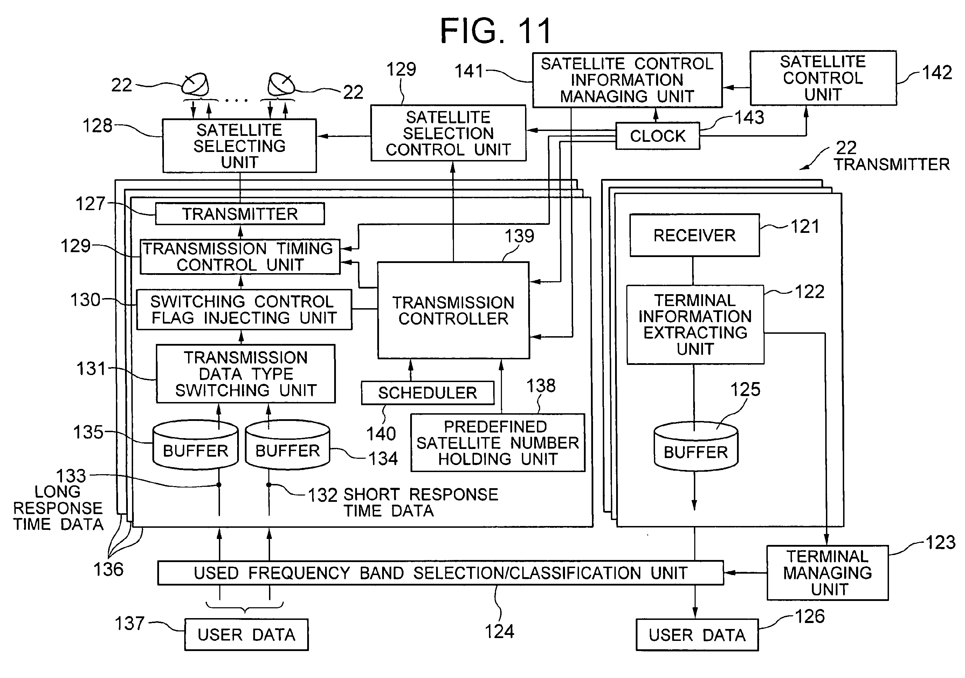

The TTAC station 2 comprises a communication device 21 which in turn comprises an antenna 22 for making communications with the orbiting satellites 3; a communication device 23 comprised of a transmitter and a receiver; a coverage area database 24 for storing data on a beam spot 5 which represents an extent of a beam emitted from an orbiting satellite 3 on the earth as a coverage area; a system database 25 for storing user information and the like for managing the communication/broadcasting system 1; and a control unit 26. The control unit 26, which totally controls the TTAC station 2, has among others a function of selecting contents of the coverage area database 24 and system database 25 to create data to be transmitted to the orbiting satellites 3; and a function of reading data transmitted thereto from the receiver terminal 11 to determine data which should be transmitted to the orbiting satellites 3 based on the read data. Details on these functions will be described later with reference to Fig. 11.

The communication/broadcasting center station 4, which holds contents provided to users, has a function of transmitting contents to the orbiting satellites 3 as required for broadcasting; and a function of controlling communications between the communication/broadcasting center station 4 and users, and is in a known configuration.

### 2. Orbiting Satellites:

The orbiting satellites 3 used in the communication/broadcasting system 1 in this embodiment will be described in detail. The orbiting satellites 3 used in this embodiment are preferably highly elliptical orbit (HEO) satellites which are quasi-zenith satellites having a large elevation angle. However, other orbiting satellites (medium earth orbit (MEO) satellites and low earth orbit (LEO) satellites) may be used instead. These orbits are generally referred to as the "non-geostationary orbits."

Generally, an orbit for an orbiting satellite is uniquely determined when given the position and speed of the orbiting satellite at a given epoch. Therefore, the six orbit elements may be given at a given epoch. Here, Kepler orbit elements are used for describing the orbit elements. The Kepler orbit elements consist of six orbit elements: a semimajor axis representative of the size of an ellipse; an eccentricity representative of the flatness of the ellipse; an orbital inclination angle representative of the inclination of the orbital plane; a right ascension of ascending node indicative of the angle formed by a straight line connecting an ascending node, at which the orbit passes through the equator plane from south to north, with the center of the earth with the vernal equinox; an argument of perigee indicative of the angle from the ascending node to the perigee; and a true anomaly which is the angle at a position on the orbit of the orbiting satellite at a given epoch that is measured from the perigee about the center of the earth. An average anomaly or an eccentric anomaly may be used instead of the true anomaly.

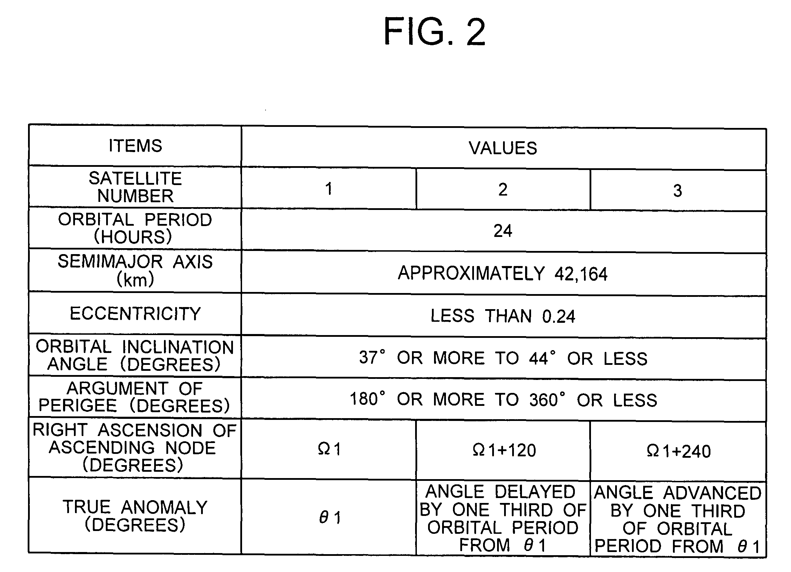

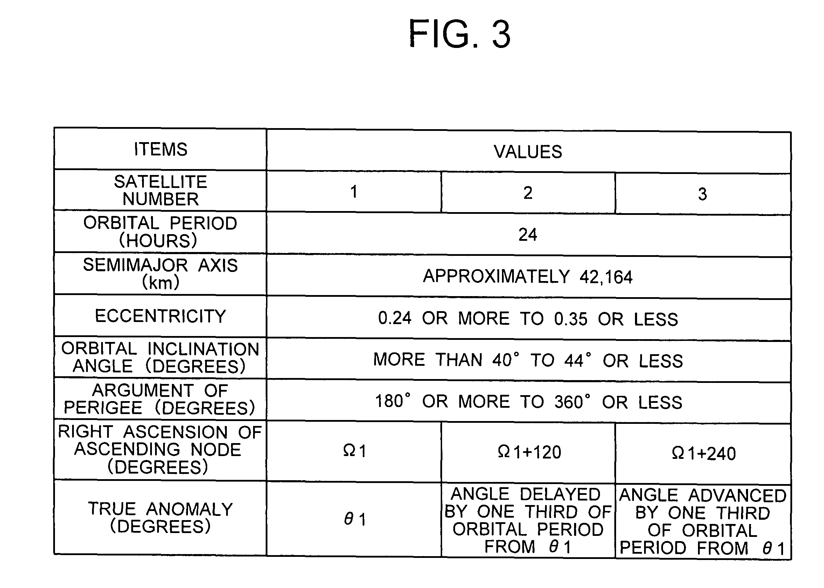

Figs. 2 and 3 show exemplary orbit elements and orbit constellation for each of three orbiting satellites (numbered 1, 2, 3), which make orbits at a 24-hour period, used for providing the communication/broadcasting service for the whole of Japan. It should be noted that the orbit of an orbiting satellite can generally fluctuate at all times due to the influences of the geo-potential, the gravitation of the moon and sun, and the like, and therefore is controlled with a certain extent of tolerance. Thus, the values for the respective orbit elements are assumed to show target nominal values after the orbit control. In the tables of Figs. 2 and 3, Ω1 and θ1 indicate the right ascension of ascending node and true anomaly, respectively, of the orbiting satellite labeled Satellite Number 1, which are set in accordance with a reference epoch. While the foregoing description has been made on the assumption that there are three orbital planes, there may be four or any proper number of orbital planes larger than four.

The respective orbiting satellites identified by the orbit elements shown in Figs. 2 and 3 are visible from any of cities in Japan from Nemuro to Naha simultaneously for a maximum of eight hours and for a minimum of six hours at the elevation angle equal to or larger than 70 degrees. The maximum visible duration of eight hours can be achieved when the orbital inclination angle is approximately 42.5 degrees and the eccentricity is approximately 0.21. Thus, the orbiting satellites using the shown orbit elements enable the realization of an orbital constellation which permits at least one or more orbiting satellites to be visible at high elevation angles from any of cities in Japan from Nemuro to Naha for 24 hours per day. Consequently, the use of such orbiting satellites enables the construction of the communication/broadcasting system 1 which reduces interrupted communications due to shields and obstacles. The argument of perigee may be 180 degrees or less.

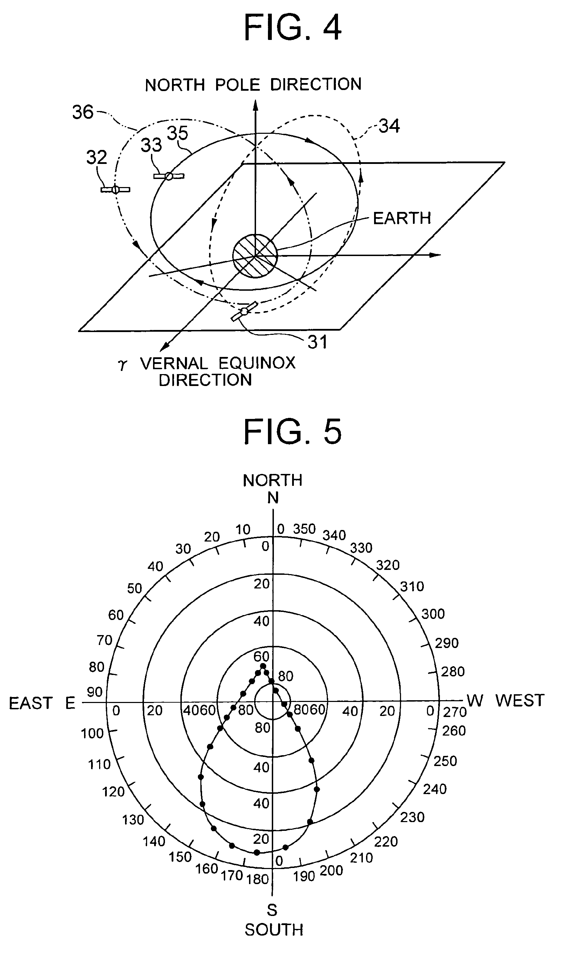

Fig. 4 illustrates an exemplary orbital constellation. There are three orbital planes, wherein an orbiting satellite 31, an orbiting satellite 32 and an orbiting satellite 33, corresponding to the aforementioned Satellite Number 1, Satellite Number 2 and Satellite Number 3, respectively, are placed in three orbits, respectively.

The orbiting satellite 31, orbiting satellite 32 and orbiting satellite 33 go around the orbit 34, orbit 35 and orbit 36, respectively, in approximately 24 hours. In other words, the orbiting satellite 31, orbiting satellite 32 and orbiting satellite 33 have an orbital period of approximately 24 hours, and the argument of perigee in a range of 180 degrees or more to 360 degrees or less. Further, these orbiting satellites 31, 32, 33 have the eccentricity less than 0.24; the orbital inclination angle in a range of 37 degrees or more to 44 degrees or less, or the eccentricity in a range of 0.24 or more to 0.35 or less, and the orbital inclination angle in a range of more than 40 degrees to 44 degrees or less.

The three orbiting satellites 31, 32, 33 have the right ascension of ascending node of the orbits spaced at intervals of 120 degrees, such that the apogees of the respective orbits appear at appropriate positions over Japan. The positional relationship is established among the respective orbiting satellites 31, 32, 33 in their respective orbits 34, 35 36 such that when the orbiting satellite 31 is at the perigee in its orbit 34, the orbiting satellite 32 is at a position in its orbit 35 at which it takes the true anomaly delayed by one third of the orbital period, and the orbiting satellite 33 is at a position in its orbit 36 at which it takes the true anomaly advanced by one third of the orbital period.

With the foregoing orbital constellation, any of the orbiting satellite 31, orbiting satellite 32 and orbiting satellite 33 is visible at all times in a direction of the elevation angle equal to or more than 70 degrees across Japan from Hokkaido to Okinawa. Since each of the orbiting satellite 31, orbiting satellite 32 and orbiting satellite 33 has the period of approximately 24 hours, they also periodically and regularly become visible and invisible in the direction of the elevation angle equal to or more than 70 degrees. In this event, the orbiting satellite 31, orbiting satellite 32 and orbiting satellite 33 appear in turn at a period of once per day in the direction of the elevation angle equal to or larger than 70 degrees in Japan, and is visible for a maximum of eight hours and for a minimum of six hours in the direction of the elevation angle equal to or larger than 70 degrees. This is repeated on a daily basis at a period of approximately 24 hours.

For example, Fig. 5 shows in a sky diagram the direction in which the orbiting satellite 31 is visible from Naha, based on the orbit elements as mentioned above. Fig. 5 may be observed in the same manner as a star chart, wherein the center of concentric circles represents the zenith, and the topside directs to the north; the right side to the west; the bottomside to the south; and he left side to the east. The concentric circles are drawn every 20 degrees of the elevation angle. Also, the azimuth is scaled on the outermost circle at intervals of 10 degrees. Plots indicate the position of the orbiting satellite 31 in the sky at intervals of one hour, and are connected in the form of the trajectory in the sky.

It can be seen from Fig. 5 that the direction in which the orbiting satellite 31 is visible from Naha is moving from the zenith toward the southern horizon. The same explanation based on the sky diagram can be applied to a change in the elevation angle over time in other cities in Japan.

For providing the communication/broadcasting service for 24 hours per day using the three orbiting satellites 31, 32, 33 as described above, a preferred combination of the inclination angle and eccentricity results in a maximum simultaneously visible time length of eight hours or longer. On the other hand, for providing the same service for 24 hours per day using four orbiting satellites 3 (see Fig. 1), a preferred combination of the inclination angle and eccentricity results in the maximum simultaneously visible time length of six hours or longer. Further, for providing the communication/broadcasting service using a plurality of orbiting satellites 3 which go around elliptic orbits, it is necessary to sequentially switch one orbiting satellite 3 to another for providing the communication/broadcasting service, in which case it is critical that the orbiting satellites 3 should be visible at a high elevation angle simultaneously from a plurality of cities.

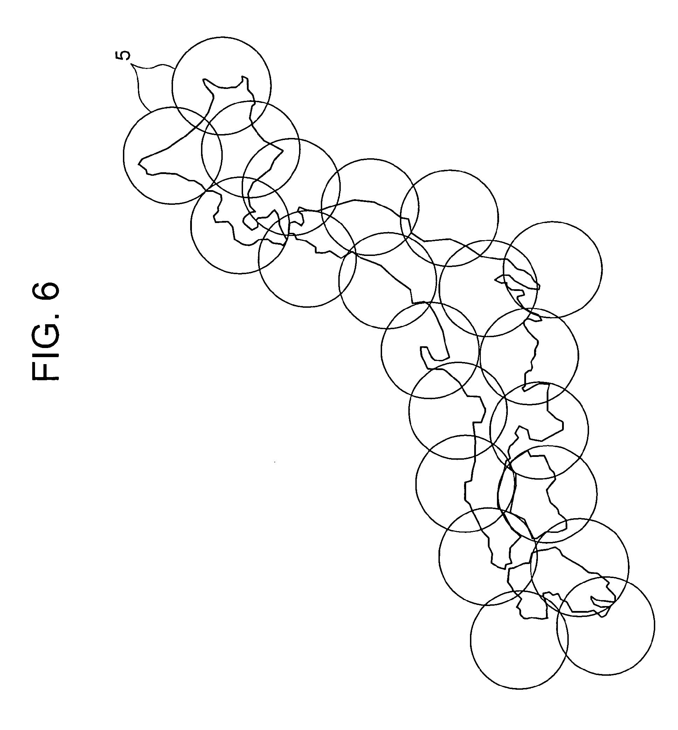

In such a serve which is provided using the orbiting satellites 3, a plurality of circular beam spots 5 cover the whole of Japan, as illustrated in Fig. 6. For example, when one orbiting satellite 3 delivers information over the whole of Japan, a beam is emitted from an appropriate device equipped in the orbiting satellite 3 for providing communications/broadcasting in the area. In other words, areas represented by the beam spots 5 are coverage areas. Generally, a small number of beams are required for covering the whole of Japan in communications and broadcasting which employ a low frequency band. However, since one beam irradiates a narrower area as the frequency is higher, a large number of beams are required as illustrated in Fig. 6.

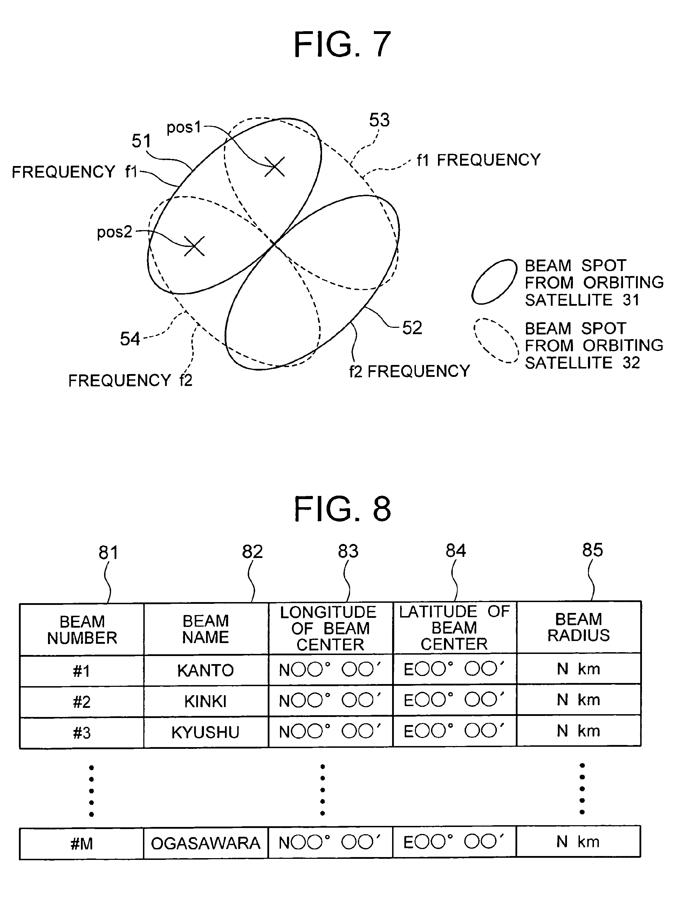

Next, switching of beam spots will be described with reference to Fig. 7. Fig. 7 shows a beam spot 51 (at frequency f1) and a beam spot 52 (at frequency f2) associated with a first orbiting satellite 3 (for example, the orbiting satellite 31), and a beam spot 53 (at frequency f1) and a beam spot 54 (at frequency f2) associated with a second orbiting satellite 3 (for example, the orbiting satellite 32). For example, the frequency f1 can be utilized both before and after the switching with respect to a point of interest pos1, whereas the frequency is switched from f1 before the switching to f2 after the switching with respect to a point of interest pos2. For this reason, when the orbiting satellite 31 is switched to the orbiting satellite 32, the currently used frequency f1 is relied on to perform processing for reserving the frequency f2 for use after switching.

The beam irradiated positions can be kept .track of in the TTAC station 2 shown in Fig. 1 using the coverage area database 24, so that information such as a change in the used frequency is communicated to the terminal device 11 and communication/broadcasting center station 4. Fig. 8 shows the contents of the coverage area database 24. The coverage area database 24 comprises a table which has the following data columns: an arbitrarily given beam number 81; a beam name 82 which gives the name of a representative region for recognizing the beam; a latitude 83 of the beam center; a longitude 84 of the beam center; and a beam radius 85.

Now, description will be given on information which is required to switch the orbiting satellite 3 for providing the communication/broadcasting service in a group of orbiting satellites as mentioned above. Assume in the following that this information is called the "satellite switching information."

The satellite switching information includes individual identification numbers of the orbiting satellites 3; an event type indicative of the type of a breakpoint at which the switching is next performed; and a count-down value which is decremented until the next breakpoint reaches.

The event type is used to indicate the meaning of an event which causes switching of a data type or a control method, prior to the occurrence of the event, such as a breakpoint of data type; a breakpoint of satellite switching; an entrance point and an exit point of a satellite switching period; a point at which pre-processing is started for switching; a point at which post-processing is started for the switching; a point at which adjusting slots are inserted due to fluctuations in the satellite orbit elements; and the like. The count-down value indicates a remaining time or the number of frames until an event occurs, and is used for purposes of permitting the terminal device 11 to make scheduling for previous preparation for a switching point. The count-down value, when counted, for example, in the number of frames, can eliminate an exact clock provided in the terminal device 11. Conversely, the count-down value may indicate the time as long as the exact time is indicated both in the terminal device 11 and the transmitter 21 of the TTAC station 2. For example, when the count-down data is represented by eight bit without sign, the count-down value continuously indicates 255 (decimal) when there is a sufficiently long time until an event occurs. When the event occurring time approaches to 254 frames (or in seconds, in milliseconds or the like) or less, the count-down value is decremented one by one, such as 254, 253, .... At the time the count-down value indicates zero, the switching is performed. The count-down value may indicate an elapsed time from a past event unless this impedes a notification of the next event. Since the indication of a past event helps a terminal connected immediately after the end of an event to rapidly know a current line situation, this can contribute to efficient scheduling of the terminal device 11. In addition, the satellite switching information may present a plurality of event types and count-down values (positive and negative values including past events) with respect to a plurality of past and future switching events, rather than only one set of these data.

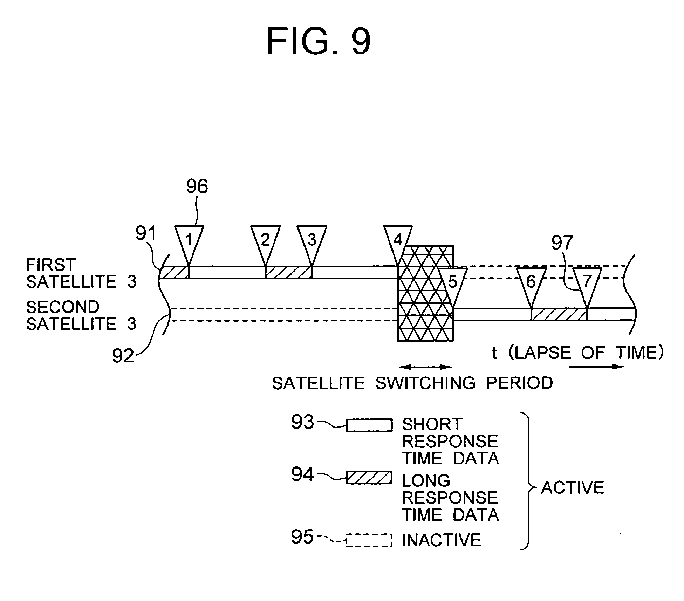

Referring next to Fig. 9, description will be made on a procedure for scheduling the aforementioned data type and data transmission/reception. Fig. 9 shows a transmission/reception pattern 91 associated with a first orbiting satellite 3 (for example, the orbiting satellite 31) before switching, and a transmission/reception pattern 92 associated with a second orbiting satellite 3 (for example, the orbiting satellite 32) after the switching. In a three-satellite alternating configuration, a similar procedure is applied to three orbiting satellites 3.

In the scheduling patterns 91, 92, blank sections 93 indicate times allocated to transmission/reception of short response time data, and sections 94, filled with right-ascending oblique lines, indicate times allocated to transmission/reception of long response time data. Broken line sections 95 indicate an inactive state before and after switching. From an inverted triangle 1 designated by 96 to an inverted triangle 7 designated by 97, the signal type and orbiting satellite 3 are switched. The short response time data used herein refers to such data that requires transmission/reception of a given amount of data in a given period of time or that requires an immediate response, such as those involved in streaming delivery, broadcasting, and the like, by way of example. On the other hand, the long response time data used herein refers to such data that requires a less immediacy for a response, such as traffic information, a variety of telemetry data, and the like. In this embodiment, by allocating a satellite switching period (a period sandwiched between inverted triangles 4, 5) is allocated to transmission/reception of long response time data, one orbiting satellite 3 is switched to another while maintaining a transfer rate for the short response time data. Therefore, the satellite switching will not exert the associated influence on the service quality of communications, broadcasting, streaming and the like.

### 3. Terminal Device:

Next, the terminal device 11 generally illustrated in Fig. 1 will be described in terms of the functions and processing with reference to Fig. 10.

In Fig. 10, a synchronization signal extracting unit 101 extracts a timing such as a frame synchronization from a received signal, while satellite switching information extracting unit 102 provides a function of extracting information related to satellite switching from the received signal. The information related to satellite switching includes, for example, information related to breakpoints such as a point at which the data type is changed, a point at which one orbiting satellite 3 is switched to another, as previously described in connection with Fig. 9. Assume that the information is transmitted from the TTAC station 2 to the terminal device 11 at regular or irregular intervals. A reception buffer 103 is used for supplying from the terminal device 11 streaming type data which provides a fixed amount of data per hour, for example, broadcasting data. Since the streaming type data has a predefined throughput per hour, it is classified into the short response time data. In this embodiment, since the different classifications of data are intermittently transmitted in turn from the TTAC station 2, the data may require reshaping for recovering the original fixed data amount per hour in the event of reproduction in the terminal device 11 and transfer to another device. The buffer 103 is used for smoothing the throughput. The amount is determined in consideration of an expected amount of data per unit time for the streaming type data, as well as the durations of the short response time data sections 93 and long response time data sections 95 described in connection with Fig. 9. Further, user data 104 is the content of data which should be sent using the terminal device 11.

A transmission timing control unit 105 adjusts a data transmission timing. For example, the transmission timing control unit 105 determines whether it is currently the time the associated terminal device 11 should transmit data, and whether the correct type of data is to be transmitted to conduct a control for transmitting data at an appropriate timing. A terminal information transmitting unit 106 adds authentication data and data which allows a data source to be identified for each terminal device to transmission data. The terminal information transmitting unit 106 also serves to add, as required, data for requesting switching of the orbiting satellite 3 or requesting a continuous use of the orbiting satellite 3 from the user to transmission data. A transmission data type switching unit 107 switches the type of data which can be currently transmitted by the associated terminal device 11. Specifically, the transmission data type switching unit 107 switches the type of data to be transmitted depending on whether short response time data or long response time data can be transmitted at present. A buffer 108 is provided for use with long response time data 109 for processing the same. A buffer 110 is provided for use with short response time data 111 for processing the same. The foregoing processing is controlled by a controller 112, such that all components located downstream of a modem 113, which forms part of the communication device 15 (see Fig. 1), operate through exchanges of digital data.

The procedure performed in the terminal device 11 for transmitting/receiving a signal first involves determination of a data type switching timing. Here, the terminal device 11 detects the timings pointed by the inverted triangles 1 - 7 in Fig. 9. Next, it is determined whether the type of data to be transmitted/received is short response time data or long response time data. Here, when the next data type has been scheduled to be long response time data, it is determined whether or not any of the timings pointed by the inverted triangles 1 - 7 overlaps with a satellite switching timing. If none of the timings overlaps with the satellite switching timing, long response time data is processed. Conversely, if any of the timings overlaps with the satellite switching timing, data is skipped. Further, when a timing is determined for switching to short response time data, the short response time data is processed.

### 4. Uplink Station:

Next, the transmitter 21 of the TTAC station 2, generally illustrated in Fig. 1, will be described in terms of its functions and processing with reference to Fig. 11.

An antenna set 22 comprises at least two antenna, one for an orbiting satellite 3 before switching and one for an orbiting satellite 3 after the switching. The number of antennas in the antenna set 22 depends on the number of orbiting satellites 3 placed in orbit. Assume herein that one of three orbiting satellites 3 is used at all times except for during a switching event. A transmitter 127 and a receiver 121, as well as a satellite selecting unit 128 for selecting an appropriate antenna 22 to be used, comprise a switch matrix. The switches are controlled by a satellite selection control unit 129.

The receiver 121 demodulates a signal received from the terminal device 11 and converts the demodulated signal to a digital version. The terminal information extracting unit 122 extracts information required for authentication at the start of connection with the receiver terminal 11, and for determination as to whether or not data comes from a correct receiver terminal 11. A terminal managing unit 123 manages a currently used frequency band (channel) in addition to the authentication and accounting for the receiver terminal 11. A used frequency band selection/classification unit 124 classifies user data 126, which is received data temporarily stored in a reception buffer 125, according to users who want to use the data, and delivers the data to particular users. The operation for classifying data according to users involves converting a particular address scheme in the satellite section into an external address scheme based on information from the terminal managing unit 123, giving a different destination to data for every user, and delivering the resulting data. The external address may be, for example, the IP addresses in the Internet.

The transmitter 127 may output intermediate frequency (IF) data because it is located in front of the satellite selecting unit 128. A transmission timing control unit 129 transmits data at a switching timing, for example, as indicated by the inverted triangle 1 - 7 in Fig. 9. A switching control flag injecting unit 130 injects, as required, satellite switching information for use by the receiver terminal 11, and information on the result of determination on a request for continuous use from the user. A transmission data type switching unit 131 switches between short response time data 132 and long response time data 133, and can temporarily store the two types of data in a buffer 134 and a buffer 135, respectively. These devices 136 are multiplexed for every frequency band (or transponder). User data 137 is outgoing data. Which frequency band to utilize is determined by the used frequency band selection/classification unit 124 with reference to data from the terminal managing unit 123. A predefined satellite number holding unit 138 holds numbers given to currently used satellites. A transmission controller 139 integrally controls the transmission for each transponder. A scheduler 140 holds schedule data such as a satellite switching time, a switching control method and the like. A satellite control information managing unit 141 holds satellite operation information related to data transmission/reception based on information from a satellite control unit 142 which is responsible for managing the operation of the orbiting satellites 3. A clock 143 provides a temporal reference for performing the operation of the overall system in synchronism.

### 5. Orbiting Satellite Switching Method:

The following description will be made on a method of switching the orbiting satellites 3 in the communication/broadcasting system 1 according to this embodiment.

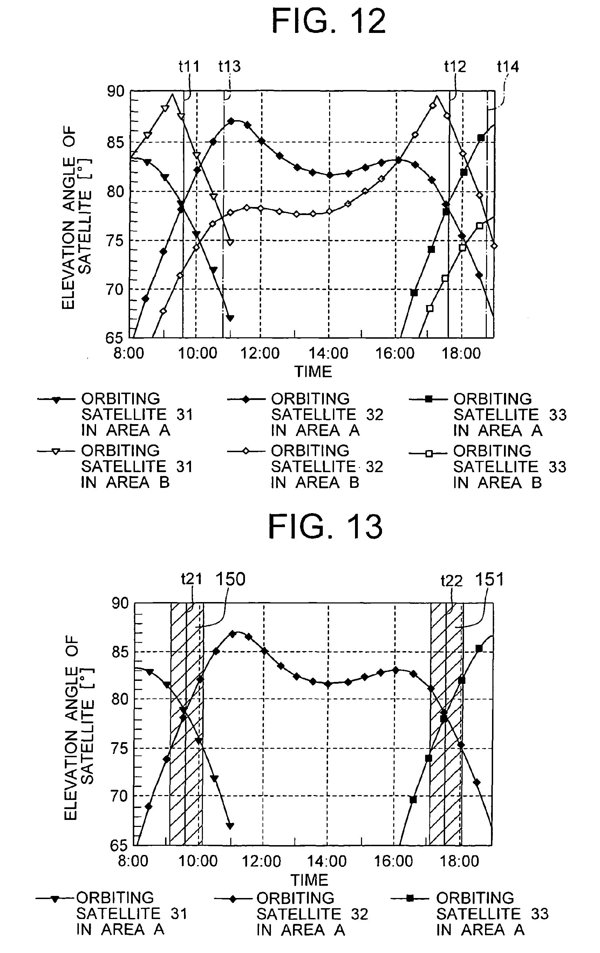

To begin with, a first method of switching the orbiting satellites 3 will be described with reference to Fig. 12. Fig. 12 illustrates changes in the elevation angles of three orbiting satellites 3 (for example, the orbiting satellites 31, 32, 33) over time in certain areas (area A, area B). The area A and area B are located at the center of or within different beam spots 5 (see Fig. 1 or 6). In both area A and area B, the elevation angles are increased in the order of the orbiting satellite 31, orbiting satellite 32 and orbiting satellite 33 as the time elapses, however, the area A differs from the area B in the time at which each of the orbiting satellites 31, 32, 33 is positioned at the highest elevation angle, and the time at which the order of the elevation angles presented by two of the three orbiting satellites 31, 32, 33 is reversed (corresponding to an intersection of two trajectories of the two orbiting satellites in Fig. 13). It is appreciated from this fact that there is a difference in the elevation angle at which each of the orbiting satellites 3 is visible depending on where the mobile station 6 or fixed station 7 shown in Fig. 1 is situated.

Assume herein that the elevation angles presented by the satellites in each of the areas A, B are defined as reference elevation angles in each beam spot 5, and a satellite switching time is determined such that the elevation angle presented by the subsequent satellite become higher in each of the areas A, B. Therefore, in the area A, the orbiting satellite 31 is switched to the orbiting satellite 32 at 9:35 or time t11 indicated by a solid line in the graph, and the orbiting satellite 32 is switched to the orbiting satellite 33 at 17:35 or time t12 indicated by a similar solid line. Consequently, a minimum elevation angle is approximately 78°, so that an optimal switching timing is provided in the area A with the highest elevation angle. In this event, if an inter-satellite handover is simultaneously performed in the area B as well, the orbiting satellite 31 which is positioned at the elevation angle of approximately 87° is switched to the orbiting satellite 32 which is positioned at the elevation angle of approximately 72° at time t11 in the area B. Similarly, at time t12, the orbiting satellite 32 which is positioned at the elevation angle of approximately 87° is switched to the orbiting satellite 33 which is positioned at the elevation angle of approximately 72°. In other words, if the inter-satellite handover is performed in the area B at the time which is determined with reference to the area A, an orbiting satellite positioned at a higher elevation angle will be switched to an orbiting satellite positioned at a lower elevation angle in the area B. This inconvenience should be eliminated because the system fails to make good use of better characteristics of the orbiting satellites at higher elevation angles.

To address this problem, the first satellite switching method in this embodiment individually optimizes a satellite switching epoch for each area. Specifically, taking Fig. 12 as an example, the orbiting satellite 31 is switched to the orbiting satellite 32 at time t11, and the orbiting satellite 32 is switched to the orbiting satellite 33 at time t12 in the area A as mentioned above. In the area B, on the other hand, the orbiting satellite 31 is switched to the orbiting satellite 32 at 18:45 or time t13 indicated by a one-dot chain line, and the orbiting satellite 32 is switched to the orbiting satellite 33 at 18:45 or time t14 indicated by a similar one-dot chain line. In this way, the minimum elevation angle is limited to approximately 77° in the area B, thereby making it possible to maintain a higher elevation angle. The communication/broadcasting system 1 permits all users to receive services without degraded quality with a high elevation angle which is ensured by changing the satellite switching timing individually for the respective areas A, B, i.e., for each beam spot 5 which defines a service area in which the services are provided.

Also, for the inter-satellite handover, the TTAC station 2 shown in Fig. 2 controls beam irradiations, and transmits information related to beam switching, i.e., satellite switching information to the terminal device 11 through the associated orbiting satellites 3. In accordance with this information, the terminal device 11 switches as appropriate the orbiting satellite 3 (for example, the orbiting satellite 31, 32 or 33) for use therewith. Thus, if all beams are switched at the same time, congestion could result from communications of messages associated with switching operations. On the contrary, the foregoing first method of this embodiment can avoid such congestion because the inter-satellite handover is sequentially performed on a beam-by-beam basis.

While the foregoing description has been made on the switching from the orbiting satellite 31 to the orbiting satellite 32 and the switching from the orbiting satellite 32 to the orbiting satellite 33, a switching time is similarly determined for switching from the orbiting satellite 33 to the orbiting satellite 31.

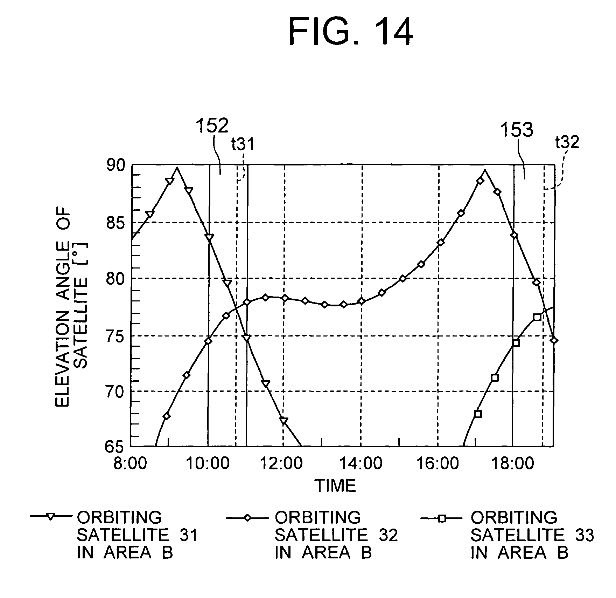

Next, a second satellite switching method will be described with reference to Figs. 13 and 14. Figs. 13 and 14 show the elevation angles of three orbiting satellites 3 (for example, the orbiting satellites 31, 32, 33) in certain areas, i.e., the area A and area B, respectively. The area A and area B represent the centers of beam spots 5 (see Fig. 1 or Fig. 6) or main cities in the beam spots 5. The elevation angles in the area A and area B are defined as reference elevation angles in the respective beam spots 5.

The second method features that the communication/broadcasting service can be provided from both of an orbiting satellite before switching and an orbiting satellite after the switching for a predetermined time in the event of switching.

For example, in Fig. 13, the orbiting satellite 31 remains active, i.e., available for the communication/broadcasting service until 10:05; the orbiting satellite 32 remains active from 9:05 to 18:05; and the orbiting satellite 33 is made active from 17:05, thereby making the pre-switching and post-switching orbiting satellites 3 simultaneously active for one hour in each of the satellite switching events. These time periods are designated by switching time zones 150, 151. Specifically, each of the switching time zones 150, 151 extends 30 minutes each before and after the epoch t21 or t22 at which the order of the elevation angles of two orbiting satellites 3, subjected to the switching event, is reversed.

For example, for starting the reception of the communication/broadcasting service within the switching time zone 150 which lasts for one hour from 9:05, the service is provided from the orbiting satellite 32. This is because of the elimination of the need for switching the orbiting satellite and the provision of stable communication/broadcasting resulting from the use of the orbiting satellite 32 which will be positioned at a higher elevation angle from that time instead of the orbiting satellite 31 which will be positioned at a lower elevation angle from that time.

When the communication/broadcasting service has been provided before the switching time zone 150 in which the orbiting satellite 31 is switched to the orbiting satellite 32, the orbiting satellite 31 can be continuously used as it is even in the switching time zone 150. In this event, no inter-satellite handover is required until the switching time zone 150 expires, so that the communication/broadcasting can be prevented from being interrupted when it finishes during this time zone. Further advantageously, congestion on the communication line can be avoided by virtue of a reduction in the transmission/reception of messages associated with the switching operation.

Additionally, the satellite switching time zones 150, 151 may be previously displayed on the terminal device 11 for notification to the user, such that the user can select an orbiting satellite suitable for his use from such criteria as a continuous service use time scheduled by him, and can receive a service using the selected orbiting satellite 3. For example, even if the user has started receiving a service from the orbiting satellite 31 before the switching time zone 150 in Fig. 13 in which the orbiting satellite 31 is switched to the orbiting satellite 32, the user can arbitrarily switch to the orbiting satellite 32 in the switching time zone 150. In this event, the user needs to transmit a satellite switching request to the TTAC station 2 from the terminal device 11 through the orbiting satellite 31 or earth network 8. Upon receipt of the switching request, the TTAC station 2 communicates satellite switching information to the terminal device 11 to start switching to the orbiting satellite 32. In this way, the terminal device 11 actually switches to the orbiting satellite 32. In this event, however, the communication/broadcasting is interrupted while the communication antenna 13 (see Fig. 1) is changed in orientation for tracking the orbiting satellite 32, but this interruption is too short to cause any problem.

In a situation in which the user has started receiving a service through the orbiting satellite 31 prior to the switching time zone 150 in which the orbiting satellite 31 is switched to the orbiting satellite 32, when the switching time zone 150 has expired, the terminal device 11 automatically switches to the orbiting satellite 32 basically in accordance with satellite switching information sent thereto through the orbiting satellite 31 from the TTAC station 2 before the expiration of the switching time zone 150. However, if the user requests the TTAC station 2 for continuous reception of communications or broadcasting with the orbiting satellite 31 from the terminal device 11 through the orbiting satellite 31 or earth network 8 before the expiration of the switching time zone 150, and the request can be accepted without causing any problem on the system, the user can continue to receive communications or broadcasting with the orbiting satellite 31. However, the terminal device 11 should switch to the orbiting satellite 32 in accordance with satellite switching information sent thereto from the TTAC station 2 through the orbiting satellite 31 before the orbiting satellite 31 falls into an unavailable state for communication/broadcasting.

While the foregoing description has been made on the switching from the orbiting satellite 31 to the orbiting satellite 32, a switching time is similarly determined for switching from the orbiting satellite 32 to the orbiting satellite 33, and switching from the orbiting satellite 33 to the orbiting satellite 31.

The second method can provide the communication/broadcasting service through the orbiting satellite 3 positioned at a higher elevation angle by changing on an area-by-area basis the length of a time zone in which the pre-switching and post-switching orbiting satellites 3 simultaneously remain active, and a method of determining the time zone. For example, in the area B shown in Fig. 14, before and after switching periods t31, t32, the orbiting satellites 31, 32, 33 experience a large change in the elevation angle before the switching, and the orbiting satellite 31, 32, 33 experience a small change in the elevation angle after the switching (as opposed to the area A in Fig. 13 in which the orbiting satellites 31, 32, 33 experience substantially equal changes in the elevation angles before and after the switching). In such a case, the satellite switching time zones may be set such that a duplicate service is provided through both orbiting satellites 3 for a predetermined period of time, for example, for 30 minutes each before and after the switching periods t31, t32. More advantageously, a time zone in which the duplicate service is provided may be shifted in front, as exemplified by satellite switching time zones 152, 153, to facilitate maintaining a high elevation angle. In this example, the satellite switching time zone 153 can be shifted from 10:00 to 11:00 with respect to the satellite switching period t31 at 10:45, thereby maintaining a minimum elevation angle at approximately 75°. While the foregoing description has been made on the satellite switching time zone 152 in which the orbiting satellite 31 is switched to the orbiting satellite 32, a similar strategy can be applied to determine the satellite switching time zone 153 for switching from the orbiting satellite 32 to the orbiting satellite 33, and the like. Also, while two orbiting satellites 3 are simultaneously active for a fixed length of time zone, the length can be determined on the basis of an average duration of an associated service.

### 6. Procedures Involved in Switching Orbiting Satellites:

The following description will be made on procedures associated with the aforementioned first and second satellite switching methods, which are performed by the TTAC station 2 and receiver terminal 11.

In the first method, the TTAC station 2 shown in Fig. 1 has previously registered satellite switching times for each area (service coverage) in the coverage area database 24, and transmits satellite switching information to the terminal device 11 when one of the satellite switching times is reached, forcing the terminal device 11 to adjust the orientation of the communication antenna 13. The adjustment of the communication antenna 13 in orientation includes calculating the angle of the communication antenna 13 with reference to a current position of the terminal device 11, available from the positioning antenna 12, and/or calculating the angle of the communication antenna 13 with reference to a previously registered location at which the terminal device 11 is installed, and selecting a frequency after a switching event for the communication device 15 of the terminal device 11. (As to the orientation adjustment of the antenna 13, the same is applied in the following method).

Next, description will be made on the procedures associated with the second satellite switching method.

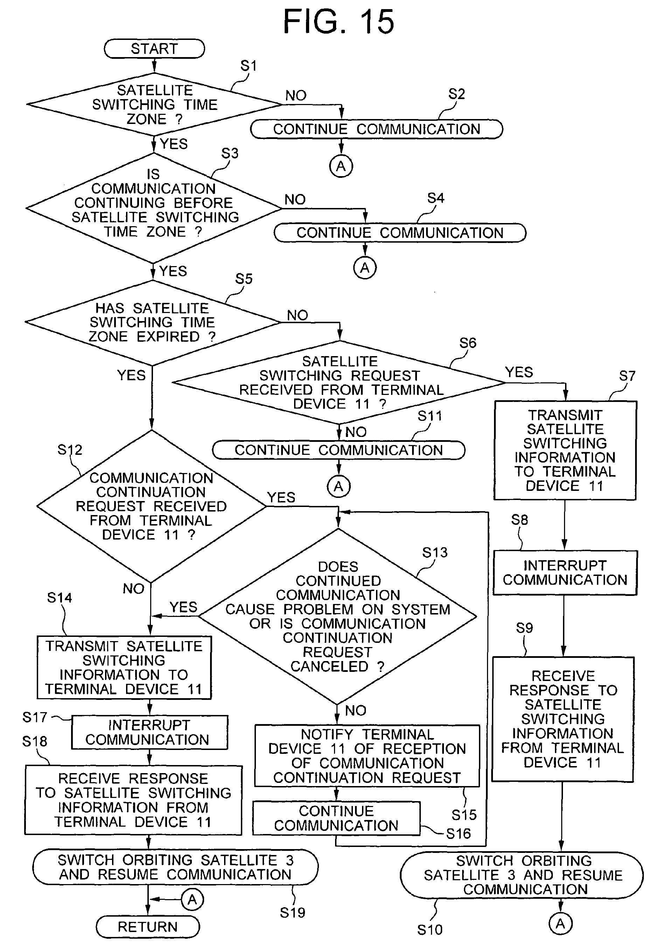

Fig. 15 illustrates the procedure performed by the TTAC station 2.

The TTAC station 2 determines at step S1 whether the current time is within a satellite switching time zone (for example, the satellite switching time zone 150, 151 or the like in Fig. 13). If not within any satellite switching time zone (No at step S1), the TTAC station 2 continues the communication/broadcasting service at step S2. Conversely, if within any satellite switching time zone (Yes at step S1), the TTAC station 2 confirms at step S3 whether the communication/broadcasting service provided to the user has continued before the satellite switching time zone. If the service has not continued before the satellite switching time zone (No at step S3), the TTAC station 2 continues the communication/broadcasting service at step S4. If the service has been continued before the satellite switching time zone (Yes at step S3), the procedure proceeds to step S5, where the TTAC station 2 checks whether or not the satellite switching time zone has expired.

If the TTAC station 2 receives a satellite switching request from a terminal device 11 (Yes at step S6) before the satellite switching time zone has expired (No at step S5), satellite switching information is transmitted to the terminal device 11 at step S7. In response, the terminal device 11 changes the condition for the communication antenna 13 based on the satellite switching information to switch the orbiting satellite 3 from which radiowaves are received. During the switching event, the terminal device 11 experiences an interrupted communication or broadcasting (step S8). The interruption during a telephone conversation involves, for example, the TTAC station 2 interrupting the call and notifying a call partner of a switching event under way. For the broadcasting, the TTAC station 2 stops the broadcasting when the orbiting satellite 3 moves out of a service area. The interruption can be experienced when electromagnetic interference is caused by congestion or low elevation angle. Then, the terminal device 11, which has undergone the switching of the orbiting satellite 3, transmits a response to the satellite switching information, so that the TTAC station 2 receives the response at step S9. Subsequently, the TTAC station 2 resumes the communication/broadcasting service using the switched orbiting satellite 3 (step S10). The processing from step S6 to step S10 is performed when the orbiting satellite 3 is desirably switched before the expiration of the switching time zone, or when the communication/broadcasting, which has been known to last for a long time, is not providing important contents at a given time, or when the user determines that the communication/broadcasting may be abandoned. Even in such a case, unless a request is made from the user for switching the orbiting satellite (No at step S6), the communication/broadcasting is continued at step S11.

On the other hand, when the satellite switching time zone has expired (Yes at step S5), the procedure proceeds to step S12, where the TTAC station 2 determines whether or not a communication/broadcasting continuation request is received from the terminal device 11.

Upon receipt of the communication/broadcasting continuation request from the terminal device 11 (Yes at step S12), the TTAC station 2 determines at step S13 whether or not the communication/broadcasting service should be continuously provided because the user may be making an important communication or the like so that the user does not wish to have the communication interrupted even with a more or less low elevation angle presented by the currently servicing orbiting satellite. If the continuation of the communication/broadcasting can cause a problem related to the system, the procedure proceeds to step S14, and otherwise to step S15. The procedure also proceeds to step S14 when the communication/broadcasting continuation request is canceled from the associated terminal device 11 because the communication/broadcasting no longer needs to be continued due to the user's circumstance or the like.

If there is not any problem related to the system or a cancellation from the user, the TTAC station 2 notifies the terminal device 11 that the communication/broadcasting continuation request has been received at step S15. Then, the requested communication/broadcasting is continued until any problem occurs on the system or the user changes the mind to cancel the request (step S16).

On the other hand, if the TTAC station 2 does not receive the communication continuation request from the terminal device 11 (No at step S12), or if any problem occurs on the system, or if the user communicates the cancellation (Yes at step S13), the satellite should be preferably switched so that the TTAC station 2 transmits satellite switching information to the terminal device 11 at step S14. The terminal device 11, to which the satellite switching information is transmitted, switches the orbiting satellite 3 in response to the satellite switching information, and during the switching event, the communication/broadcasting is interrupted (step S17). Subsequently, the terminal device 11 transmits a response to the satellite switching information upon completion of the switching of the orbiting satellite 3. Then, the TTAC station 2 receives the response at step S18, and resumes the communication/broadcasting using the switched orbiting satellite (step S19).

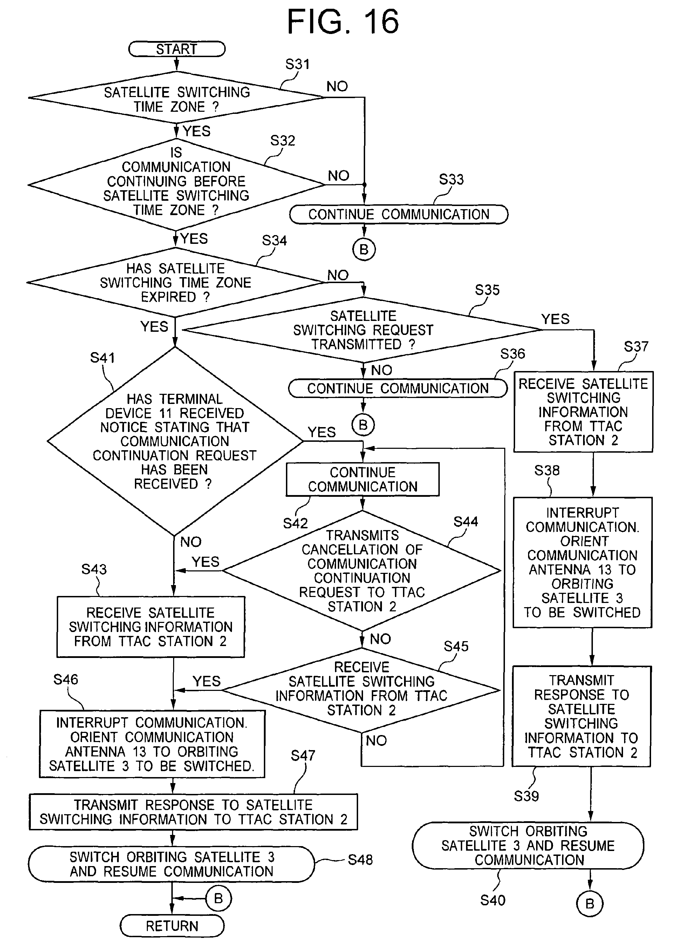

Next, Fig. 16 illustrates the procedure performed by the terminal device 11.

As a satellite switching time zone is reached while the terminal device 11 is receiving the provision of the communication/broadcasting service (Yes at step S31), the terminal device 11 confirms at step S32 that the communication/broadcasting has continued before the satellite switching time zone is reached. If the satellite switching time zone is not reached (No at step S31), or if the communication/broadcasting has not continued before the satellite switching time zone (No at step S32), the terminal device 11 continues the reception of the communication/broadcasting service (step S33).

When the terminal device 11 is continuously receiving the provision of the communication/broadcasting service, the user can select the orbiting satellite 3 from which radiowaves are received until the satellite switching time zone expires (No at step S34). Therefore, the communication/broadcasting is continued as it is at step S36 unless the user does not make a satellite switching request (No at step S35). Conversely, if the user wishes to switch the satellite, the terminal device 11 transmits a satellite switching request to the TTAC station 2 (Yes at step S35).

In response to the satellite switching request, the TTAC station 2 transmits satellite switching information which includes information on an orbiting satellite 3 to which the currently servicing orbiting satellite 3 is switched, and the terminal device 11 receives the satellite switching information at step S37. At step S38, the terminal device 11 temporarily interrupts the transmission/reception of the communication/broadcasting, and adjusts the communication antenna 13 in Fig. 1 to be compatible with the orbiting satellite 3 identified by the satellite switching information, for example, by changing the orientation of the communication antenna 13, such that the terminal device 11 can receive radiowaves from the post-switching orbiting satellite 3. Upon completion of the adjustment, the terminal device 11 transmits a response to the satellite switching information to the TTAC station 2 which is thus notified of the completed adjustment (step S39). Consequently, the communication/broadcasting is resumed through the switched orbiting satellite 3 (step S40).

On the other hand, if the satellite switching time zone has expired while the user is continuously receiving the provision of the communication/broadcasting service (Yes at step S34), the user determines whether the reception should be continued through the current orbiting satellite 3 or the current orbiting satellite 3 should be switched to another one in consideration of the importance of the current communication/broadcasting, a future duration of the service, and the like. In accordance with the user's determination, the terminal device 11 transmits or does not transmit a communication continuation request. When the terminal device 11 transmits the communication continuation request, the TTAC station 2 determines whether or not the terminal device 11 is permitted to continue the communication through the aforementioned procedure (see Fig. 15), and communicates the result of the determination to the terminal device 11. Therefore, the terminal device 11 checks at step S41 whether or not it has received a notice stating that the communication continuation request had been received. When such a notice has been received (Yes at step S41), the procedure proceeds to step S42. Conversely, if the notice is not received, or if the terminal device 11 does not originally transmit the communication continuation request, the procedure proceeds to step S43.

When the communication continuation request is received by the TTAC station 2, i.e., when the procedure proceeds to step S42, the communication/broadcasting is continued. The communication/broadcasting is continued as it is except that the communication continuation request is canceled by the user's choice (Yes at step S44), or except that the terminal device 11 is forced to switch the orbiting satellite 3 with satellite switching information received from the TTAC station 2 (Yes at step S45).

The terminal device 11 receives the satellite switching information from the TTAC station 2 at step S43 unless the communication continuation request is received by the TTAC station 2, or when the communication continuation request, once received, is canceled by the user's determination. In response, the terminal device 11 temporarily interrupts the communication/broadcasting at step S46, and changes the orientation of the communication antenna 13 in Fig. 1 such that the terminal device 11 can receive radiowaves from an orbiting satellite 3 identified by the satellite switching information. The processing at step S46 is also performed when the satellite switching information is received at the aforementioned step S45.

Then, as the terminal device 11 has changed the orientation of the communication antenna 13, the terminal device 11 transmits a response to the satellite switching information to the TTAC station 2 for notifying to that effect at step S47. In response, the communication/broadcasting service is resumed for the terminal device 11 (step S48).

As described above, according to the foregoing embodiment, when the communication/broadcasting service is provided using the orbiting satellites 3, data (signals) required for providing the service can be communicated upon switching from one satellite to another so as not to cause any inconvenience to the user. Here, the terminal device 11, which is used on the basis of the first satellite switching method, comprises a feature for forcedly switching the orbiting satellite 3 based on the satellite switching information. The terminal device 11, which is used on the basis of the second satellite switching method, comprises a unit for displaying a satellite switching time zone (for example, the satellite switching time zone 150 in Fig. 13), and a feature for making a communication continuation request, a request for canceling the communication continuation request, and a satellite switching request during the satellite switching time zone. The TTAC station 2 in turn has features compatible with the first method or second method, but preferably has features compatible with the second method such that the user can use the terminal device 11 which supports either of the methods.

The communication/broadcasting center station 4 in Fig. 1 also switches the orbiting satellite 3 for use in the provision of services in a satellite switching event. In this event, required processing is performed on the basis of satellite switching information which is obtained from the TTAC station 2 through the orbiting satellite 3. With the second satellite switching method, the communication/broadcasting center station 4 does not make a communication continuation request, but may be able to transmit a satellite switching request. This satellite switching request can be used to prompt the TTAC station 2 to conduct forced satellite switching when the service is still being provided through an orbiting satellite 3, which is still servicing even after the expiration of the satellite switching time zone (for example, the satellite switching time zone 150 in Fig. 13) in response to a request from the user, but is likely to go out of a service area of the communication/broadcasting center 4.

Alternatively, the TTAC station 2 may possess contents provided to the user to additionally serve as the communication/broadcasting center station 4.

As described above, the communication/broadcasting service can be provided using an orbiting satellite positioned at a higher elevation angle at each location in a service area, thereby sufficiently reducing radiowaves intercepted by buildings and the like. Further, for the communication/broadcasting service within a predefined time period, the inter-satellite handover may be avoided even at a timing at which the current orbiting satellite should be switched to the next one, thereby preventing interruption of communications/broadcasting. Also advantageously, congestion can be avoided by distributing the inter-satellite handovers over time, and reducing the frequency of the inter-satellite handovers.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A satellite-based signal receiving method comprising the steps of:
receiving a signal sent from a predetermined satellite of a plurality of satellites (31, 32, 33) moving along respective non-geostationary orbits (34, 35, 36) in a predetermined service area (5); and
switching said satellite used for receiving the signal at a timing determined for each said service area such that said satellite holds a predetermined elevation angle.

2. A satellite-based signal receiving method according to claim 1, wherein the signal can be received for a predetermined time period (150, 151) both from said pre-switching satellite and said post-switching satellite.

3. A satellite-based signal receiving method according to claim 2, wherein said predetermined time period extends from a time at which the elevation angle of said post-switching satellite reaches a predetermined angle to a time at which the elevation angle of said pre-switching satellite reaches said predetermined angle.

4. A satellite-based service providing method for providing users within a predetermined service area (5) with at least one of a communication service and a broadcasting service utilizing a predetermined satellite of a plurality of satellites (31, 32, 33) moving along respective non-geostationary orbits (34, 35, 36), said method comprising the step of:
switching said satellite used for providing the service at a timing determined for each said service area such that said satellite holds a predetermined elevation angle.

5. A satellite-based service providing method according to claim 4, wherein the service is provided for a predetermined time period (150, 151) both from said pre-switching satellite and said post-switching satellite.

6. A satellite-based service providing method according to claim 5, wherein said predetermined time period extends from a time at which the elevation angle of said post-switching satellite reaches a predetermined angle to a time at which the elevation angle of said pre-switching satellite reaches said predetermined angle.

7. A satellite control method for transmitting/receiving a signal utilizing a satellite selected from a plurality of satellites (31, 32, 33) moving along respective non-geostationary orbits (34, 35, 36), said method comprising the step of:
switching said satellite used for receiving a signal by transmitting information on the position of said satellite for use in transmission/reception of the signal after a switching event to a service area (5) through said satellite before the switching event in said service area.

8. A satellite control method according to claim 7, further comprising:
transmitting, together with said position information, a command signal for instructing an earth station (11) which utilizes said satellites to make an antenna (13) compatible with said post-switching satellite.

9. A receiver terminal (11) for receiving a signal from a predetermined satellite of a plurality of satellites (31, 32, 33) moving along respective non-geostationary orbits (34, 35, 36), wherein:
said receiver terminal is configured to be able to request a switching timing from a first satellite to a second satellite during a predetermined time period (150, 151) when said satellite used for receiving the signal is switched from said first satellite to said second satellite.

10. A receiver terminal (11) according to claim 9, wherein said receiver terminal is configured to be able to request for a use of said first satellite even after said predetermined time has expired.

11. A satellite control apparatus (2) for transmitting/receiving a signal utilizing a satellite selected from a plurality of satellites (31, 32, 33) moving along respective non-geostationary orbits (34, 35, 36), said apparatus comprising:
means (128, 129, 141, 142), operative when said satellite for transmitting/receiving a signal is switched from a first satellite to a second satellite, for controlling said satellites such that the signal can be received both from said pre-switching satellite and said post-switching satellite in a service area (5) for a predetermined time period (150, 151); and
means (127) for transmitting information for switching said satellite based on a request from a user for the predetermined time period.

12. A satellite control apparatus according to claim 11, further comprising means (121, 122, 123, 127, 139), responsive to a signal for requesting to use said first satellite after said predetermined time period has expired, for determining whether or not the continuous use can be permitted, and communicating the result of the determination to an appropriate receiver terminal (11) of the user.
